# EUROPÄISCHE PATENTANMELDUNG

(11) **EP 0 664 229 A1**
(43) Veröffentlichungstag der Anmeldung: **26.07.1995**
(21) Anmeldenummer: 94119914.3
(22) Anmeldetag: 16.12.1994
(51) Int. Cl.: B60C 9/18

(54) **Gürtelreifen für Fahrzeugräder**

(30) Priorität: 25.01.1994 DE 4402068
(71) Anmelder: TYRE CONSULT VENLO B.V., NL-5911 AZ VENLO (NL)
(72) Erfinder: Markewitz, Wolfgang, D-40883 Ratingen (DE); Janus, Jonny, D-40210 Düsseldorf (DE)
(74) Vertreter: Türk, Gille, Hrabal, Leifert

(57) **Zusammenfassung**

Es ist ein Gürtelreifen für Fahrzeugräder beschrieben, der einen torusförmigen Körper aus gummiartigem Material aufweist, welcher eine gürtelförmige Verstärkungs-Einlage enthält, die im Bereich unterhalb der Lauffläche des Reifens einen bandförmigen Teil aufweist, der in Umfangsrichtung des Reifens dehnbar, vorspannbar und unter Einfluß äußerer Kräfte rückstellbar ist. Der bandförmige Teil der Verstärkungs-Einlage enthält quer oder weitgehend quer zur Umfangsrichtung des Gürtelreifens verlaufende Einschnitte oder Ausnehmungen, welche die bandförmige Verstärkungs-Einlage teilweise durchsetzen und welche reihenförmig angeordnet sind, wobei die Einschnitte parallel in aufeinanderfolgenden Reihen gegeneinander versetzt sind. Dazwischen befinden sich querverlaufende durchgehende Abschnitte, die für die gewünschte Quersteifigkeit des Gürtels sorgen.

## Beschreibung

Die Erfindung betrifft einen für Fahrzeugräder bestimmten Gürtelreifen, der einen torusförmigen Körper aus gummiartigem Material mit einer darin angeordneten gürtelförmigen Verstärkungs-Einlage aufweist, wobei die Verstärkungseinlage im Bereich unterhalb der Lauffläche des Reifens ein bandförmiges Teil, das in Umfangsrichtung des Reifens dehnbar, vorspannbar und unter Einfluß innerer und äußerer Kräfte zurückstellbar ist, umfaßt.

Das bandförmige Teil der Verstärkungs-Einlage bildet dabei einen Festigkeitsträger für die Seitensteifigkeit der elastisch vorspannbaren Gürtel-Konstruktion.

Für tangential dehnbare Gürtelkonstruktionen von Fahrzeugreifen sind bandförmige Festigkeitsträger als sogenannte Quergürtel bekannt, welche radial in mehreren Ebenen vorgeformt werden können (EP 0 357 826). Diese sinusförmig oder ähnlich gewellten Bänder des Quergürtels sind zwar in der Lage, die gewünschten Längsdehungen auszuführen, jedoch lassen sich häufig Rißbildungen oder ähnliche Schäden bei zusätzlichen lokalen Deformationen der Bänder in radialer und lateraler Richtung nicht vermeiden. Außerdem nehmen die bekannten wellenförmigen Bänder des Quergürtels relativ viel Raum in Anspruch, da sie über die Höhe ihrer Wellenamplituden aus fertigungs- und mechanisch bedingten Gründen mit Kautschuk-Matrix überdeckt sein müssen. Das hat ein verhältnismäßig großes Volumen des Gürtels zur Folge, das sowohl Kosten verursacht als auch über innere Reibung in der Gürtelmasse unnötig Energie verbraucht.

Der Erfindung liegt die Aufgabe zu Grunde, einen Gürtelreifen für Fahrzeugräder mit einem als Festigkeitsträger dienenden bandförmigen Quergürtel zu schaffen, der einerseits eine ausreichende Quersteifigkeit des Reifens gewährleistet und andererseits in Umfangsrichtung des Reifens ausreichend dehnbar, vorspannbar und zurückstellbar ist, ohne dabei unnötig Raum bzw. Volumen im Reifenkörper einzunehmen.

Diese Aufgabe wird erfindungsgemäß mit einem Gürtelreifen für Fahrzeugräder gelöst, der die Merkmale des Patentanspruches 1 aufweist. Vorteilhafte Ausgestaltung der Erfindung sind Gegenstand der Unteransprüche.

Gemäß der Erfindung ist der in tangentialer Richtung elastische Quergürtel so ausgebildet, daß er sich im Gleichgewichtszustand, also spannungsfrei, praktisch nur noch in einer Ebene erstreckt, das heißt keine Wellungen oder sonstigen Ausformungen aufweist, sondern in seiner Höhe praktisch nur seiner Materialdicke entspricht.

Im Gegensatz zu bekannten Konstruktionen von Quergürteln, die sich für die Verformbarkeit in Umfangsrichtung radial in mehreren Ebenen erstrecken, verläuft der erfindungsgemäße Quergürtel in spannungsfreiem Zustand praktisch in einer Ebene in Umfangsrichtung des Gürtelreifens und ist dabei dennoch in tangentialer Richtung elastisch, das heißt dehnbar, vorspannbar und zusammendrückbar.

Dieses Eigenschaften werden vorzugsweise durch eine sinnvolle Anordnung von in Querrichtung verlaufenden schlitzförmigen Ausnehmungen und dazwischen verbleibenden Stegen erreicht, wobei die Ausnehmungen zweckmäßig reihenförmig angeordnet und auch in aufeinanderfolgenden Reihen gegeneinander versetzt sein können, so daß sich kein in Umfangsrichtung versteifender Querschnitt ergibt.

Andererseits ist es auch möglich, den erfindungsgemäßen Quergürtel aus zumindest einem druck- und zugfesten Endlos-Filament zu bilden, wobei auch mehrere Filamente umeinander zu einem Cord geschlagen werden können. Die in gleicher Ebene angeordneten Filamente sind etwa zick-zackförmig so nebeneinander angeordnet, daß die beispielsweise bogenförmigen Umformungen oder Umlenkungen der einzelnen Filamente an den Enden oder Längskanten des Quergürtels eine elastisch nutzbare Verformung in tangentialer Richtung des Quergürtels ermöglichen. Ein in dieser Weise gebildeter endloser Festigkeitsträger setzt der tangentialen Deformationsmechanik des Gürtelreifens den geringst möglichen Widerstand entgegen, was sich auf das energetische Verhalten des Reifens besonders vorteilhaft auswirkt.

Die druckfesten Endlos-Filamente verlaufen vorzugsweise nahezu im rechten Winkel zur Laufrichtung des Gürtelreifens, also lateral, und sind an den beiden Kanten des Quergürtels durch jeweilige Umformungen oder Umlenkungen von fast 180°, jedoch druck- und zugfest in beiden Lateralrichtungen, miteinander verbunden. Bei Einwirkung von Seitenkräften erfolgt somit eine gegenseitige Abstützung der nebeneinander quer liegenden Filamente.

Ein weiterer Vorteil dieser Ausführungsform ist die ausgeprägte radiale Flexibilität, die beim Überfahren von Fahrbahnunebenheiten benötigt wird. Die somit gegebene Veringerung des Deformationswiderstandes des Gürtelreifens im Gürtelbereich wirkt sich vorteilhaft auf die Senkung der radialen und tangentialen Dämpfungsarbeit des Reifens aus.

Ferner kann der erfindungsgemäße Quergürtel aus einem mäanderförmig ausgebildeten Band bestehen, das von seinen Seitenkanten ausgehende, querverlaufende Ausschnitte enthält, die einander abwechselnd von der einen und der anderen Seitenkante ausgehen und nahe der jeweils entgegengesetzten Seitenkante des Bandes enden.

Da bei den erwähnten Ausführungsformen des bandförmigen Gürtels dieser in einer Ebene liegend ausgebildet sein kann, läßt er sich auch aus speziell ausgestaltetem Stahl-Band bzw. aus Stahl-Filamenten oder Stahl-Drähten herstellen. In jedem Falle ist eine ausreichende Quersteifigkeit des als Festigkeitsträger des Gürtels dienenden Bandes oder Geleges gewährleistet.

Die Erfindung wird weiterhin anhand von in der beigefügten Zeichnung schematisch dargestellten Ausführungsbeispielen erläutert, und zwar zeigt,
- Fig. 1: eine schaubildliche geschnittene Teilansicht eines erfindungsgemäß ausgestalteten Gürtelreifens,
- Fig. 2: eine Draufsicht auf einen Ausschnitt oder Teil eines Gürtelbandes des Gürtelreifens nach einer Ausführungsform der Erfindung,
- Fig. 3: eine ähnliche Ansicht wie Fig. 2 einer abgewandelten Ausführungsform des Gürtelbandes und
- Fig. 4: eine Ansicht einer weiteren Ausführungsform des Gürtelbandes.

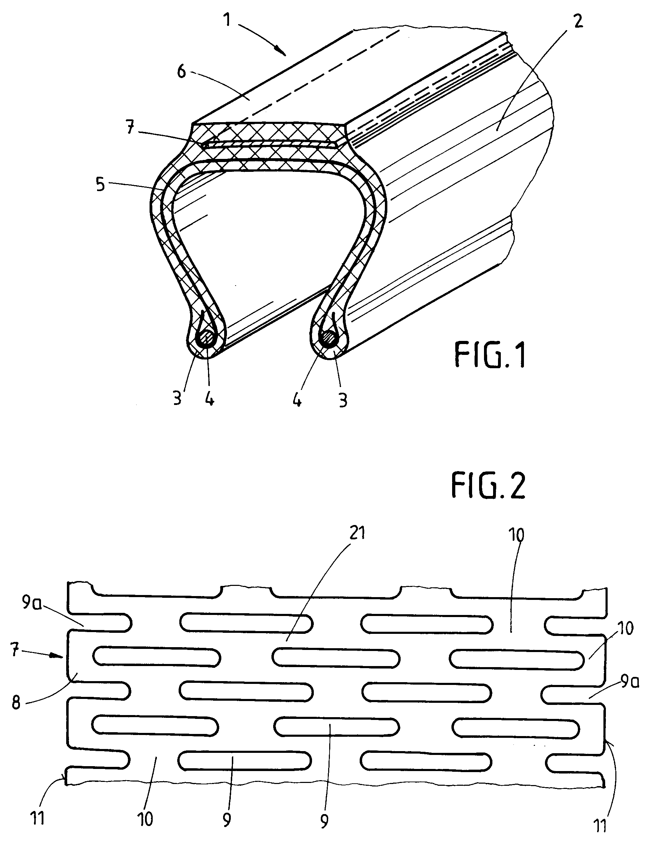

Der in Fig. 1 gezeigte Luftreifen oder Gürtelreifen 1 für nicht näher dargestellte Fahrzeugräder hat einen torusförmigen Körper 2 aus gummiartigem Material mit daran angeformten Reifensitzen 3, die auf dem nicht dargestellten Fahrzeugrad aufliegen. In jedem Reifensitz 3 ist ein Wulstkernring 4 aus dehnungssteifem Material wie Drahtseil eingebettet. Innerhalb des torusförmigen Körpers 2 erstreckt sich von Wulstkernring zu Wulstkernring eine Kordeinlage 5, die als eine Art Bewehrung des Gummimaterials des torusförmigen Körpers 2 dient.

Innerhalb des torusförmigen Körpers 2 ist unterhalb der Lauffläche 6 desselben in das Gummimaterial zusätzlich zu einem hier nicht gezeigten Umfangsgürtel eine gürtelförmige Verstärkungs-Einlage 7 eingebettet, die anhand von drei in Fig. 2, 3 und 4 dargestellten Ausführungsbeispielen im einzelnen nachstehend beschrieben ist.

Bei der Ausführungsform gemäß Fig. 2 besteht die gürtelförmige Einlage 7 aus einem flachen Band 8, das aus Stahl oder auch aus Kunststoff bestehen kann und sich in Umfangsrichtung des Gürtelreifens 1 als Quergürtel-Band des Gürtels erstreckt. Dieses Band 8 enthält eine Vielzahl von streifenförmigen oder schlitzartigen Ausschnitten 9, die sich quer zur Umfangsrichtung des Gürtelreifens 1 und damit der Einlage 7 erstrecken. Diese Ausschnitte sind in aufeinanderfolgenden Reihen und dabei in diesen Reihen in Querrichtung gegeneinander versetzt parallel zueinander angeordnet, wie Fig. 2 erkennen läßt.

Zwischen benachbarten Ausschnitten 9 jeweils einer Reihe von Ausschnitten befinden sich die Ausschnitte 9 trennende Stege 10, welche aufgrund ihrer zick-zack-förmigen Folge insgesamt das Band 8 zusammenhalten. Jeder Steg 10 liegt dabei an beiden Enden jeweils einem Ausschnitt 9 der benachbarten Reihen von Ausschnitten gegenüber, so daß eine elastische Dehnung des Bandes 8 in Längsrichtung oder auch eine elastische Stauchung durch das Zusammenwirken der einzelnen Auschnitte 9 und der diesen gegenüberliegenden Stege 10 gewährleistet ist.

An den Längskanten 11 des Bandes 8 befinden sich nach außen offene Ausschnitte 9a in jeder zweiten Reihe von Ausschnitten 9, so daß auch im Bereich der Seitenkanten oder Längskanten 11 des Bandes 8 die gewünschte elastische Dehnbarkeit, Vorspannbarkeit, Rückstellbarkeit und Stauchbarkeit des Bandes 8 in Längsrichtung gewährleistet ist.

Zwischen den Reihen der gegeneinander versetzten Ausschnitte 9 bzw. 9a befinden sich jeweils ununterbrochene Querstege 21, die von einer zur entgegengesetzten anderen Längskante 11 des Bandes 8 verlaufen und für die Quersteifigkeit des Bandes 8 sorgen.

Durch Abstimmung der Materialdicke des Bandes 8 und/oder des Verhältnisses der Dimensionen der Ausschnitte 9, der Stege 10 und der Querstege 21 läßt sich eine bestimmte progressive tangentiale Federkennlinie des Bandes 8 einstellen, die es gegebenenfalls ermöglicht, auf weitere tangentiale Federelemente des Gürtels zu verzichten, ohne die laterale Steifigkeit des Gürtels und damit des Gürtelreifens 1 insgesamt zu beeinträchtigen. Die Federkennlinie des Bandes gemäß Fig. 2 läßt sich darüber hinaus auch durch die Shore-Härte der Gummi-Belagmischung bzw. deren Schichtdicken modifizieren. So versteifen dünne, beiderseits am Band 8 anliegende Gummischichten - - bei gegebener Gummimischung - infolge ihres geringeren Derformations-Spielraums die Feder-Charakteristik des Bandes 8, während dickere am Band anliegende Gummischichten gleicher Gummimischung zu einer weicheren Feder-Charakteristik führen. Daher läßt sich das Volumen und somit auch das Gewicht des Gürtels und des gesamten Gürtelreifens deutlich reduzieren.

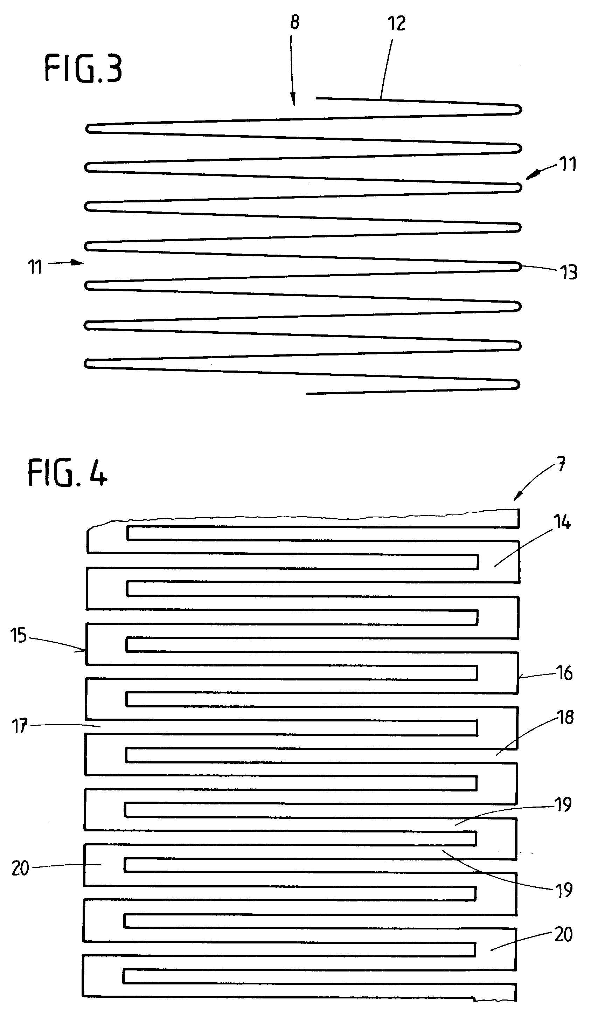

Bei der Ausführungsform gemäß Fig. 3 ist das die gürtelförmige Einlage 7 bildende Band 8 aus einem Endlos-Filament 13 gebildet, das zick-zackförmig gelegt ist. An den Seitenkanten 11 des Bandes 8 befinden sich bogenförmige Umlenkungen 13, die einerseits für eine ausreichende Seitenstabilität sorgen und andererseits die elastische Dehnbarkeit, Vorspannbarkeit und Rückstellbarkeit dieses speziellen Bandes gewährleisten.

Bei der Ausführungsform gemäß Fig. 4 besteht die gürtelförmige Einlage 7 auf einem streifenförmigen Band 14, das aus Kunststoff oder Stahl hergestellt ist. Dieses blechförmige oder folienförmige Band 14 enthält von seinen Seitenkanten 15 und 16 abwechselnd ausgehende tiefe Einschnitte 17 bzw. 18, die einander überlappen, so daß das streifenförmige Band 14 mäanderförmig mit parallel und in Querrichtung zum Band 14 verlaufenden stegförmigen Abschnitten 19 und diese abwechselnd an der einen oder anderen Seitenkante 15 bzw. 16 verbindenden Stegen 20 besteht. Somit ist das Band 14 in Längsrichtung dehnbar und zusammendrückbar bzw. stauchbar, in Querrichtung oder lateraler Richtung jedoch seitenstabil.

Bei den Ausführugnsformen gemäß Fig. 3 und 4 sorgen die in Querrrichtung des Bandes verlaufenden Filamente 13 (Fig. 3) bzw. die stegförmigen Abschnitte 19 (Fig. 4) für die benötigte Quersteifigkeit des betreffenden Bandes.

Vorzugsweise wird das schlitzartig strukturierte Band, z.B. durch Werkstoff-Festigkeit und die Relation von Stegbreite zu Steglänge, so bemessen, daß sich unter tangentialer Zugbelastung (aus Reifen-Innendruck und Zentrifugalkraft) des Bandes die querverlaufenden Stege aus ihrer flachen Lage etwas aufrichten und dabei sich jeweils zwischen den sie versetzt miteinander verbindenden Knotenpunkten oder Stegen verbiegen lassen, so daß über diese Verformung der Stege eine elastische Federwirkung entsteht. Die Stege ändern also gegenüber der Umfangskrümmung des Reifens unter Zugbelastung ihren Winkel.

Ein derart bemessenes Quergürtel-Band wird im spannungsfreien, also flachen, Zustand vorzugsweise mit einer Umfangslänge auf den Karkass-Rohling aufgebracht, der etwa 100 % des Formmaßes (Heizform) entspricht, so daß die querverlaufenden Stege im ausvulkanisierten Reifen flach, also spannungsfrei, bleiben.

Wird ein solchermaßen hergestellter Gürtelreifen, dessen dehn-steifer Anschlag bei etwa 101 bis 104 % liegen kann, betriebsbedingt unter Zugspannung gesetzt, dehnt er sich unter Winkeländerung seiner querverlaufenden Stege in Umfangsrichtung elastisch. Bei diesem Vorgang vergrößert das Quergürtel-Band infolge der sich radial aufrichtenden Stege seine Bauhöhe erheblich. Aus dem flach in einer Ebene verlaufenden Band verformt sich der Qurgürtel unter Zug zu einer geometrisch dreidimensional aufgelösten Struktur.

Wird das erfindungsgemäß schlitzartig strukturierte und unter Zugspannung verformte Quergürtel-Band mit großer Kraft radial belastet, wie dies in der Reifen-Aufstandsfläche durch die Abstützung der Radlast der Fall ist, so werden die aufgerichteten querverlaufenden Stege hierdurch aus ihrer vergrößerten Bauhöhe wieder in ihre ursprüngliche flache Lage zurückgedrückt, womit aber gleichzeitig in diesem belasteten Abschnitt des Gürtel-Umfanges die durch die Winkeländerung der querverlaufenden Stege zuvor ermöglichte elastische Dehnung von z.B. 102 % auf 100 % mechanisch zurückgeführt wird.

Mit dieser mechanischen, belastungsgesteuerten Zwangsrückformung des Quergürtel-Bandes wird die Federfunktion des Umfangsgürtels kinematisch außerordentlich wirksam unterstützt.

Im betriebsbereiten Reifen ergeben sich für das erfindungsgemäße schlitzartig strukturierte Quergürtel-Band damit im Quer- und Längsschnitt zwei geometrisch völlig voneinander abweichende Formen:
A) Im unbelasteten Umfang erhält das Quergürtel-Band infolge der durch die Zugspannung ausgelösten elastischen Dehnung über die Winkeländerung der Stege radial eine größere Bauhöhe. Diese Geometrieänderung wirkt sich signifikant auf das Eigenschwingverhalten des Gürtels aus, was die frühe Entstehung von Resonanzknoten (stehende Wellen) unterdrückt.
B) Im belasteten Aufstand erzwingt die radial wirkende Radlast die mechanische kinematische Verkürzung des Quergürtel-Bandes zurück in die ursprüngliche flache Bauhöhe.

In dieser flachen Form kann sich das schlitzartig strukturierte Quergürtel-Band auch allen auftretenden Bodenunebenheiten sehr leicht durch lokale Biegevorgänge (innerhalb des Komposits) anpassen.

Das Quergürtel-Band verläuft also im spannungsfreien Zustand flach in einer Ebene und verändert sich unter Zugbelastung je nach Ausführungsvariante durch Vergrößerung der Steg-Winkel radial in seiner Bauhöhe, also dreidimensional, und läßt sich dabei elastisch dehnen. Im elastisch gedehnten Zustand des Bandes werden die Stege durch radiale Belastung wieder flach in die ursprüngliche Ebene zurückgeformt, wobei die Umfangsdehnung kinematisch zwangsweise zurückgeführt wird. Das Quergürtel-Band wird im flachen Zustand mit etwa 100 % Umfangslänge bezogen auf das Formmaß der Reifenpresse in den Reifen-Rohling eingebaut und läßt sich betriebsbedingt elastisch bis auf 105 % dehnen. Im Betrieb ändert sich die Bauhöhe des Gürtel-Bandes zwischen belasteten und unbelasteten Umfang und damit sein Längsschnitt.

## Patentansprüche

1. Gürtelreifen (1) für Fahrzeugräder, mit einem torusförmigen Körper (2) aus gummiartigem Material, der eine gürtelförmige Verstärkungs-Einlage (7) enthält, die im Bereich unterhalb der Lauffläche (6) des Reifens einen bandförmigen Teil (8) aufweist, der in Umfangsrichtung des Reifens dehnbar, vorspannbar und unter Einfluß äußerer Kräfte rückstellbar sowie stauchbar ist,
**dadurch gekennzeichnet**,
daß der bandförmige Teil (8) der Verstärkungs-Einlage (7) quer oder weitgehend quer zur Umfangsrichtung des Grütelreifens (1) verlaufende Einschnitte oder Ausnehmungen (9, 9a; 18) enthält, welche die bandförmige Verstärkungs-Einlage (7) teilweise durchsetzen und welche reihenförmig angeordnet sind, wobei die Einschnitte parallel in aufeinanderfolgenden Reihen gegeneinander versetzt sind.

2. Gürtelreifen nach Anspruch 1, dadurch gekennzeichnet, daß zwischen den Einschnitten (9, 9a; 18) quer zur Längsrichtung der Gürteleinlage (7) verlaufende, die Quersteifigkeit bestimmende Querstege (19, 21) vorgesehen sind.

3. Gürtelreifen nach Anspruch 1 oder 2, dadurch gekennzeichnet, daß der bandförmige Teil (8) der Verstärkungs-Einlage (7) aus steifem Kunststoff besteht.

4. Gürtelreifen nach Anspruch 1 oder 2, dadurch gekennzeichnet, daß der bandförmige Teil (8) der Verstärkungs-Einlage (7) aus Stahl-Blech besteht.

5. Gürtelreifen nach einem der Ansprüche 1 bis 4, dadurch gekennzeichnet, daß der bandförmige Teil (8) der Verstärkungs-Einlage (7) aus der spannungsfreien Ruhelage in Umfangsrichtung der Einlage um bis zu 5 % dehnbar ist.

6. Gürtelreifen nach Anspruch 5, dadurch gekennzeichnet, daß der bandförmige Teil (8) der Verstärkungs-Einlage (7) aus der spannungsfreien Ruhelage in Umfangsrichtung der Einlage um bis zu etwa 4 % dehnbar ist.

7. Gürtelreifen nach Anspruch 6, dadurch gekennzeichnet, daß der bandförmige Teil (8) um bis zu etwa 2 % dehnbar ist.

8. Gürtelreifen nach einem der Ansprüche 1 bis 7, dadurch gekennzeichnet, daß zur Modifizierung der Federkennlinie des bandförmigen Teiles (8) der verstärkungs-Einlage (7) die Shore-Härte des Gummimaterials und dessen Schicktdicke variabel sind.

9. Gürtelreifen nach einem der Ansprüche 1 bis 8, dadurch gekennzeichnet, daß der bandförmige Teil (8) der Verstärkungs-Einlage (7) im wesentlichen in Querrichtung verlaufende Aussteifungsabschnitte (12; 19) aufweist, die an ihren Enden wechselseitig miteinander verbunden sind.
